# EUROPÄISCHE PATENTSCHRIFT

(11) **EP 1 650 010 B1**
(45) Veröffentlichungstag und Bekanntmachung des Hinweises auf die Patenterteilung: **02.07.2014**
(21) Anmeldenummer: 05020380.1
(22) Anmeldetag: 19.09.2005
(51) Int. Cl.: B29C 65/20, H05B 3/14, B29K 27/06

(54) **Keilförmiges Heizelement und Verfahren zu seiner Herstellung**
Wedge-shaped heating element und process for its manufacture
Élément chauffant en forme de coin et procédé pour sa fabrication

(30) Priorität: 19.10.2004 DE 102004051045
(43) Veröffentlichungstag der Anmeldung: 26.04.2006
(73) Patentinhaber: Herz, Franz-Josef, 56566 Neuwied (DE)
(72) Erfinder: Herz, Franz-Josef, 56566 Neuwied (DE); Werner, Jan, Dr., 56410 Montabaur (DE)
(74) Vertreter: Grommes, Karl F.

(56) Entgegenhaltungen:
- EP-A- 1 452 261
- EP-A- 1 647 392
- EP-A2- 0 406 223
- GB-A- 817 913
- JP-A- 5 278 114
- JP-A- 5 278 115
- US-A- 2 730 161

## Beschreibung

### Technisches Gebiet

Die Erfindung betrifft ein keilförmiges Heizelement für eine Vorrichtung zum Kontaktschweißen, insbesondere von Kunststofffolien oder Kunststoffbahnen, und ein Verfahren zu seiner Herstellung. Statt der Bezeichnung "Keilförmiges Heizelement" ist in der Praxis auch die Bezeichnung Heizkeil" gebräuchlich, ebenso wie Schweißkeil".

### Stand der Technik

Heizkeile, werden üblicherweise aus Metallen hergestellt, weil sie das für den Schweißprozeß erforderliche hohe Wärmeleitvermögen aufweisen. Nachteilig bei diesen Heizkeilen ist allerdings, dass für unterschiedliche Kunststoffe Heizkeile aus unterschiedlichen Metallen benötigt werden. Dieses erfordert ein zeitaufwendiges Umrüsten der Schweißvorrichtungen, wenn die zu verschweißenden Kunststoffmaterialien gewechselt werden.

Ferner unterliegen Heizkeile aus Metall beim Einsatz von Schweißautomaten im Deponieabdichtungsbereich sowie im Tunnelbau durch die dort unvermeidlich auftretenden Verunreinigungen (z.B. durch das Erdreich) einem hohen Verschleiß.

Bei der Verschweißung von PVC (Polyvinylchlorid) kann es aufgrund der relativ hohen Schweißtemperaturen zu einem gewissen thermischen Zerfall des Kunststoffes kommen. Hierbei können als Zerfallsprodukte unter anderem Chlor und Chlorwasserstoff entstehen, die eine schädliche Korrosionswirkung auf die metallischen Heizkeile ausüben.

Schließlich tritt beim Verschweißen von Kunststofffolien mittels eines Heizkeils aus Metall häufig ein Ankleben der jeweils erhitzten Folien an dem Metallkeil auf. Es sind deshalb auch Heizelemente aus einem Verbundwerkstoff bekannt, der sich aus einem keramischen Basiswerkstoff und eine Wärme leitenden Material zusammensetzt. So offenbart das Dokument D1 (JP 05 278115 A) ein Werkzeug zum Verschweißen von Kunststoffschäumen. Dieses besitzt Kontaktflächen, welche entweder aus gleitfähigem Metalloxid oder Keramik oder einem sog. Cermet bestehen. Letzteres ist ein Verbundwerkstoff aus einem keramischen Werkstoff und einem Wärme leitenden Metall, was im Ergebnis zu einem Hartmetall führt. Es ist zudem bekannt, bei notwendigen höheren Temperaturen dem Aufheizen über Kontaktflächen noch einen kontaktfreien Aufheizvorgang folgen zu lassen, gemäß dem Dokument D2 (JP 05 278114 A). Und schließlich ist noch ein weiterer Stand der Technik durch das Dokument D3 (EP-A2-0 406 223) bekannt.

### Darstellung der Erfindung

Der Erfindung liegt die Aufgabe zugrunde, ein keilförmiges Heizelement zu offenbaren, das für unterschiedliche Kunststoffmaterialien einsetzbar ist und sowohl eine hohe Festigkeit, eine hohe Abrasionsbeständigkeit und eine hohe Temperatur- und Thermoschockbeständigkeit bis ca. 800 °C aufweist als auch eine Korrosionsbeständigkeit gegen die beim Schweißen verschiedener polymerer Werkstoffe auftretenden chemischen Einflüsse besitzt. Ferner soll ein Ankleben des Kunststoffes an der Oberfläche des jeweiligen Heizkeils bei dessen bestimmungsgemäßer Verwendung vermieden werden. Der Erfindung liegt ferner die Aufgabe zugrunde, ein Verfahren zur Herstellung eines solchen Heizelementes anzugeben.

Diese Aufgabe wird hinsichtlich des Heizelementes erfindungsgemäß durch die Merkmale des Anspruchs 1 und hinsichtlich des Verfahrens durch die Merkmale des Anspruchs 6 gelöst. Weitere, besonders vorteilhafte Ausgestaltungen der Erfindung offenbaren die Unteransprüche.

Um zu erreichen, dass das Heizelement auch ein Metallen vergleichbares Wärmeleitvermögen aufweist, hat es sich als besonders vorteilhaft erwiesen, wenn das Heizelement aus einem Verbundwerkstoff besteht, der sich aus einem speziellen keramischen Basiswerkstoff und Halbmetall, zusammensetzt, so dass das Heizelement einerseits die mechanischen und chemischen Eigenschaften des keramischen Basiswerkstoffes und andererseits die wärmeleitenden Eigenschaften des Halbmetalles besitzt.

Es hat sich gezeigt, dass bei Verwendung eines derartigen Heizelementes kein Ankleben der Kunststofffolien an der jeweiligen Oberfläche des Heizelementes erfolgt. Außerdem weisen die erfindungsgemäßen Heizelemente ein geringeres Gewicht auf als vergleichbare Heizelemente aus Metall, sind säurebeständig und abriebfest, besitzen eine optimale Wärmeverteilung und eine schnelle Aufheizzeit und sind praktisch für alle zu verschweißenden Kunststoffmaterialien geeignet.

Die Herstellung des aus dem Verbundwerkstoff bestehenden Heizelementes mit einem vorgegebenen Anforderungsprofil erfolgt durch eine geeignete Prozeßtechnik, entweder während des keramischen Herstellungsprozesses oder im Anschluß daran, z.B. durch Flüssig- oder Gasphasen infiltration.

Bei dem keramischen Werkstoff kann es sich um ein Borid, Carbid, Nitrid oder Oxid der Elemente Aluminium, Bor, Silicium, Titan, Wolfram oder Zirconium (wie AIN, Al₂O₃, B₄C, BN, SiC, Si₃N₄, TiB, TiB₂, TiC, TiN, WC, ZrO₂) und/oder Mischphasen und Komposite dieser Einzelkomponenten handeln.

Als besonders vorteilhaft hat es sich erwiesen, als keramischen Werkstoff gesintertes Siliciumcarbid mit einer Dichte zwischen 3 und 3,2 g/cm³ zu verwenden. Dieses Material weist eine extrem gute mechanische Festigkeit, Härte und Abrasionsbeständigkeit sowie eine gute chemische Beständigkeit gegenüber den freiwerdenden Zersetzungsprodukten beim Schweißen von PVC auf.

Um auch eine gute Wärmeleitfähigkeit zu erreichen, hat es sich als zweckmäßig erwiesen, ein mit Silicium infiltriertes Siliciumcarbid (SiSiC) zu verwenden. Vorzugsweise wird dazu ein keramischer Heizkeil aus SiC mit freiem Silicium im Überschuß hergestellt. Als gut geeignet hat sich ein Anteil von ca. 85 bis 95 Gew.-% Siliciumcarbid und entsprechend von 15 bis 5 Gew.-% an freiem, metallischem Silicium erwiesen. Die Dichte dieses Verbundwerkstoffes liegt vorzugsweise zwischen 3,08 und 3,12 g/cm³.

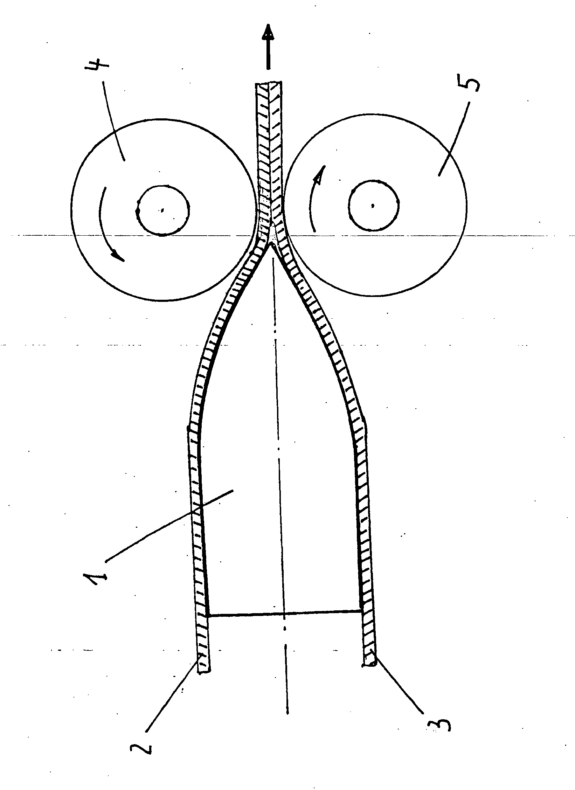

### Kurze Beschreibung der Zeichnung

Weitere Einzelheiten und Vorteile der Erfindung ergeben sich aus dem folgenden anhand einer Figur erläuterten Ausführungsbeispiel.

Die Figur zeigt die schematische Seitenansicht einer Anordnung mit einem erfindungsgemäßen, elektrisch beheizbaren Heizkeil 1, zwei miteinander zu verschweißenden Kunststoffbahnen 2 und 3 und zwei sich synchron gegeneinander drehenden Andruckrollen 4, 5.

Der erfindungsgemäße Heizkeil 1 besteht aus einem Verbundwerkstoff mit einem Basiswerkstoff aus Siliciumcarbid, welches zur Verbesserung der Wärmeleitfähigkeit durch eine Gasphaseninfiltration mit Silicium infiltriert wurde. Das sich ergebende infiltrierte Siliciumcarbid wies folgende physikalischen Werte auf:

| | |
|---|---|
| **Anteil an Siliciumcarbid:** | ca. 85 - 95 Gew.-% |
| | |
| **Gefüge:** | |
| - offene Porosität | 0 Vol.% |
| | |
| **Mechanische Eigenschaften:** | |
| **-** Biegefestigkeit | 180 - 450 MPa |
| - Härte (HV) | 14-25x10³Nmm⁻² |
| | |
| **Thermische Eigenschaften:** | |
| - spezifische Wärmekapazität | 650-1000 Jkg⁻¹K⁻¹ |
| - Wärmeleitfähigkeit | 110 - 160 Wm⁻¹K⁻¹ |
| - Temperaturwechselbeständigkeit | 400 K |
| - maximale Einsatztemperatur | 1380 °C |

Das infiltrierte Siliciumcarbid besitzt wie ersichtlich neben sehr guten mechanischen Eigenschaften auch eine ausreichend gute Wärmeleitfähigkeit. Überdies zeigte sich eine gute Beständigkeit gegenüber den freiwerdenden Zersetzungsprodukten beim Verschweißen von PVC-Folienbahnen.

Die Erfindung ist selbstverständlich nicht auf das vorstehend beschriebene Ausführungsbeispiel beschränkt.

### Bezugszeichenliste

- 1: Heizelement, Heizkeil
- 2, 3: Kunststoffbahnen
- 4, 5: Andruckrollen

## Patentansprüche

1. Keilförmiges Heizelement für eine Vorrichtung zum Kontaktschweißen insbesondere von Kunststofffolien oder Kunststoffbahnen (2, 3), wobei das Heizelement (1) aus einem Verbundwerkstoff besteht, der sich aus einem keramischen Basiswerkstoff und einem wärmeleitenden Material zusammensetzt, **dadurch gekennzeichnet, dass** es sich bei dem keramischen Werkstoff um ein Borid, Carbid, Nitrid oder Oxid der Elemente Aluminium, Bor, Silicium, Titan, Wolfram oder Zirconium und/oder Mischphasen und Komposite der Einzelkomponenten handelt, und dass es sich bei dem wärmeleitenden Material des Verbundwerkstoffes um ein Halbmetall handelt.

2. Heizelement nach Anspruch 1, **dadurch gekennzeichnet, dass** der keramische Werkstoff aus gesintertem Siliciumcarbid mit einer Dichte zwischen 3 und 3,2 g/cm³ besteht.

3. Heizelement nach Anspruch 1, **dadurch gekennzeichnet, dass** es sich bei dem Halbmetall um Silicium handelt.

4. Heizelement nach Anspruch 3, **dadurch gekennzeichnet, dass** der Verbundwerkstoff aus siliciuminfiltriertem Siliciumcarbid besteht und vorzugsweise eine Dichte zwischen 3,08 und 3,12 g/cm³ aufweist.

5. Heizelement nach Anspruch 4, **dadurch gekennzeichnet, dass** der Anteil des Siliciums in dem siliciuminfiltrierten Siliciumcarbid zwischen 5 und 15 Gew.-% beträgt.

6. Verfahren zur Herstellung eines aus einem Verbundwerkstoff bestehenden Heizkeiles nach einem der Ansprüche 1 bis 5, **dadurch gekennzeichnet, dass** als Basiswerkstoff Siliciumcarbid gewählt wird und dieses durch eine Gasphaseninfiltration mit Silicium infiltriert wird.

## Claims

1. Wedge-shaped heating element for a device for contact welding, in particular of plastics material films or plastics material sheets (2, 3), the heating element (1) consisting of a composite material, which is composed of a ceramic base material and a heat-conductive material, **characterised in that** the ceramic material is a boride, carbide, nitride or oxide of the elements aluminium, boron, silicon, titanium, tungsten or zirconium and/or mixed phases and composites of the individual components, and **in that** the heat-conductive material of the composite material is a semi-metal.

2. Heating element according to claim 1, **characterised in that** the ceramic material consists of sintered silicon carbide with a density between 3 and 3.2 g/cm³.

3. Heating element according to claim 1, **characterised in that** the semi-metal is silicon.

4. Heating element according to claim 3, **characterised in that** the composite material consists of silicon-infiltrated silicon carbide and preferably has a density between 3.08 and 3.12 g/cm³.

5. Heating element according to claim 4, **characterised in that** the proportion of silicon in the silicon-infiltrated silicon carbide is between 5 and 15 % by weight.

6. Method for producing a heating wedge consisting of a composite material according to any one of claims 1 to 5, **characterised in that** silicon carbide is selected as the base material and the latter is infiltrated by a gas phase infiltration with silicon.

## Revendications

1. Elément chauffant en forme de coin pour un dispositif de soudage par contact, en particulier de feuilles de matière plastique ou de bandes de matière plastique (2, 3), l'élément chauffant (1) étant constitué d'un matériau composite, qui se compose d'un matériau de base céramique et d'un matériau thermoconducteur, **caractérisé en ce qu'**il s'agit pour le matériau céramique d'un borure, carbure, nitrure ou oxyde des éléments aluminium, bore, silicium, titane, tungstène ou zirconium et/ou phases mixtes et composite de composants individuels, et **en ce qu'**il s'agit pour le matériau thermoconducteur du matériau composite d'un semi-métal.

2. Elément chauffant selon la revendication 1, **caractérisé en ce que** le matériau céramique est composé de carbure de silicium fritté d'une masse volumique comprise entre 3 et 3,2 g/cm³.

3. Elément chauffant selon la revendication 1, **caractérisé en ce qu'**il s'agit de silicium pour le semi-métal.

4. Elément chauffant selon la revendication 3 , **caractérisé en ce que** le matériau composite est composé de carbure de silicium infiltré et présente, de préférence, une masse volumique comprise entre 3,08 et 3,12 g/cm³.

5. Elément chauffant selon la revendication 4, **caractérisé en ce que** la part du silicium s'élève dans le carbure de silicium infiltré entre 5 et 15 % du poids.

6. Procédé pour la fabrication d'un coin de chauffage composé d'un matériau composite selon l'une des revendications 1 à 5, **caractérisé en ce qu'**il est choisi en tant que matériau de base du carbure de silicium et que celui-ci est infiltré par une infiltration en phase gazeuse avec du silicium.
